# EUROPEAN PATENT APPLICATION

(11) **EP 1 555 056 A2**
(43) Date of publication of application: **20.07.2005**
(21) Application number: 04425893.7
(22) Date of filing: 26.11.2004
(51) Int. Cl.: A63H 33/04, F16B 47/00, F16B 1/00, F16B 21/20

(54) **Support and positioning structure for modular elements of assemblies for realising complex figures**

(30) Priority: 14.01.2004 IT RM20040008
(71) Applicant: Plast Wood s.r.l., 07023 Calangianus (SS) (IT)
(72) Inventor: Tusacciu, Edoardo Pio, 07023 Calangianus (SS) (IT)
(74) Representative: Iannone, Carlo Luigi

(57) **Abstract**

The invention concerns a support and positioning structure for modular elements of assemblies for realising complex figures comprising an element (10; 20; 30) providing at least a seat (11; 21; 31) supporting a substantially spherical shaped element (2) and at least two seats (12; 22; 32) supporting substantially elongated bars (1).

## Description

The present invention relates to a support and positioning structure for modular elements of assemblies for realising complex figures.

More specifically, the invention concerns to structures of the above kind allowing improving the flexibility of construction employing magnetic and ferromagnetic elements.

As it is well known, in recent years different assemblies have been suggested, based on the interaction between magnetic elements and ferromagnetic elements, for realising complex figures

In the first macro category providing bars with magnetic ends must be considered as included toys known on the market with the name Roger's Connection, providing bars, all having the same sizes, comprised of two magnets separated by an air gap, or those marketed under the trade name Geomag®, the bars of which are comprised of a combination of magnet - Ferro magnet - magnet. In both cases complex figures are realised by employing ferromagnetic spheres.

In the second macro-category it must be considered as included the product known on the market as Supermag®, patented and realised by the same Applicant, providing bars with different sizes, and completely comprised of magnetic material. Supermag® has realised a remarkable improvement with respect to the known solutions, both as far as the possibility of realising always more complex figures, as well as for sturdiness of the obtained figures.

However, the need exists of having structures allowing realising a support of the elements comprising the complex figure.

It is further felt the need of having a structure allowing to position said elements comprising the complex figure.

These and other results are obtained according to the present invention by a structure that can be applied to each one of the known solutions available on the market.

It is therefore specific object of the present invention a support and positioning structure for modular elements of assemblies for realising complex figures comprising an element providing at least a seat supporting a substantially spherical shaped element and at least two seats supporting substantially elongated bars.

Preferably, according to the invention, said element is comprised of plastic material.

Furthermore, according to the invention, said element provides a circular seat housing the substantially spherical shaped element, with at least a lateral opening for introducing the end of a bar.

Still according to the invention, said element provides a central seat for fixed joint of a substantially spherical shaped element, and at least two lateral fixed joints for the ends of said bars.

Particularly, it is possible providing three lateral fixed joints or four lateral fixed joints, or a higher number of lateral fixed joints.

According to a further embodiment of the structure according to the invention, said element is comprised of two hemi-parts that can be coupled each other.

Particularly, said hemi-parts realise the seat for housing the substantially spherical shaped element.

Preferably, according to the invention, coupling between said hemi parts is obtained by fixed joint.

According to the invention, said element comprising the structure is obtained by moulding.

The present invention will be now described, for illustrative but not limitative purposes, according to its preferred embodiments, with particular reference to the figures of the enclosed drawings, wherein:
Figures 1a - 1 c show a first embodiment of the structure according to the invention;
Figures 2a - 2f show a second embodiment of the structure according to the invention;
Figures 3a - 3d show a third embodiment of the structure according to the invention; and
Figures 4a - 4c show three arrangements of a fourth embodiment of the structure according to the invention.

In all the embodiments shown in the figures, bars 1 and spheres 2 will be used, that are those sold by the same Applicant under the Trademark Supermag®, but it is to be understood that the same solutions can be applied to other spheres and bars available on the market.

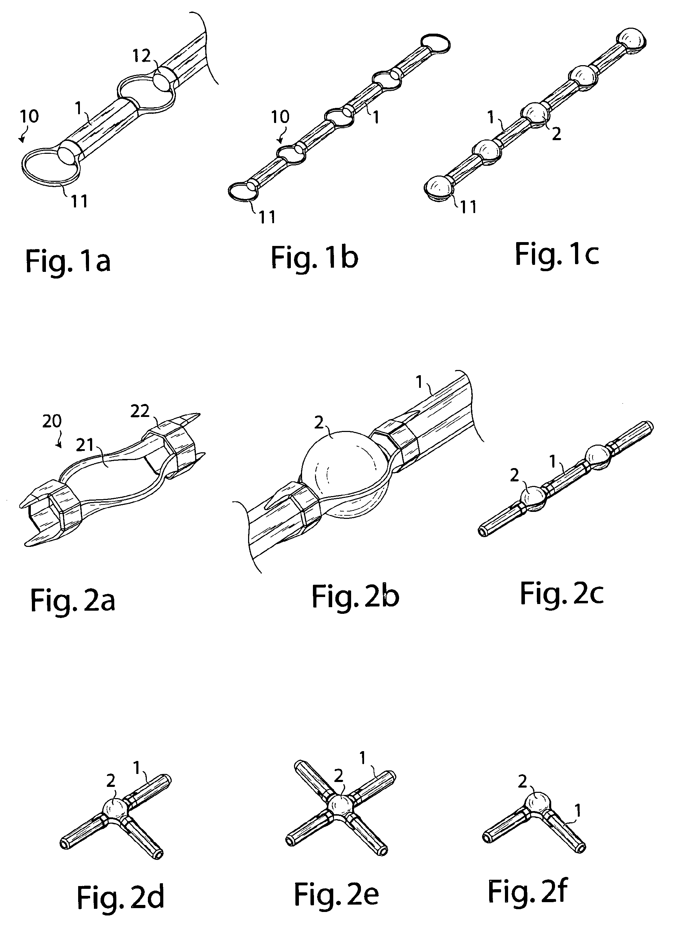

Observing first figure 1, it is shown a first embodiment of the structure according to the invention, generally indicated by reference number 10.

The solution shown provides a ring 11, blocking the sphere 2, provided with openings 12 for the introduction of the relevant ends of the bars 1.

Using a plurality of elements 10, it is possible to obtain, for example, a figure as shown in figure 1c.

Element 10 does not provide any metallic insert, so that it is not necessary its magnetisation. It can be realised by a single moulding.

Coming now to observe figure 2, it is shown a second embodiment of the structure according to the invention, generally indicated by reference number 20.

Said element 20 provides a seat 21, for the sphere 2, and two or more seats 22 supporting the bars 1.

As it can be noted from figures 2d, 2e and 2f, element 20 can be comprised with two, three or four seats 22 for creating structures as illustrated in the various figures.

In this case too, it can be realised only with plastic material by a single moulding.

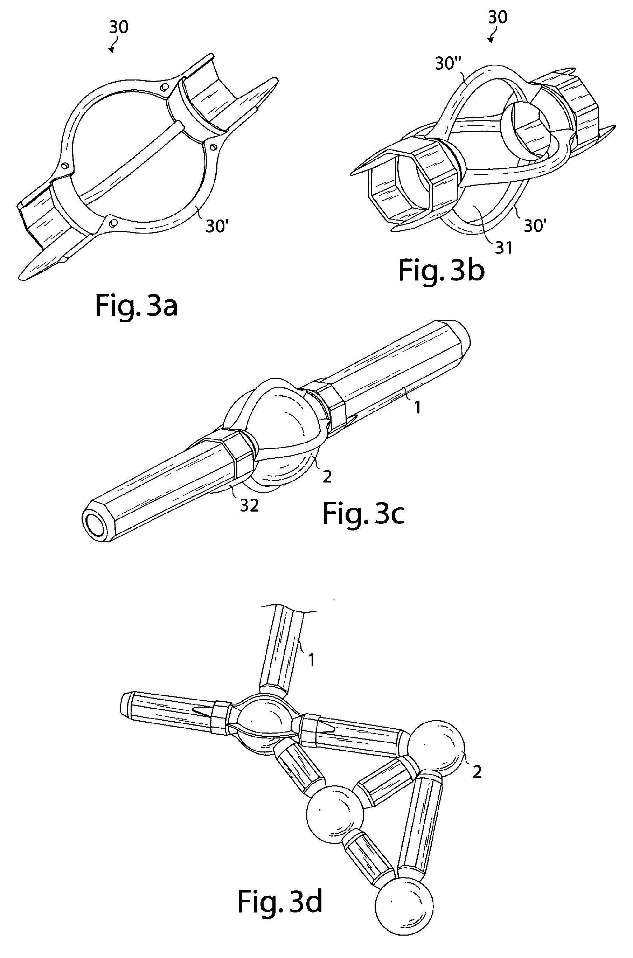

Coming now to observe figure 3, it is shown a third embodiment of the structure according to the invention, generally indicated by reference number 30.

Element 30 is comprised of two hemi-parts 30' and 30", coupable by fixed joint, in order to obtain structure of figure 3b. a structure 31 supporting the sphere 2 and two structures 32 supporting the bars 1 are thus obtained.

In this case, element 30 is provided to the user in the form of two hemi-parts 30', 30", coupled each other by fixed joint.

In each one of the embodiments shown and described, realisation of elements 10, 20, 30 by plastic material does not prevent the coupling of the ferromagnetic sphere with further bars 1 provided outside the structure according to the invention (see for example figure 3d).

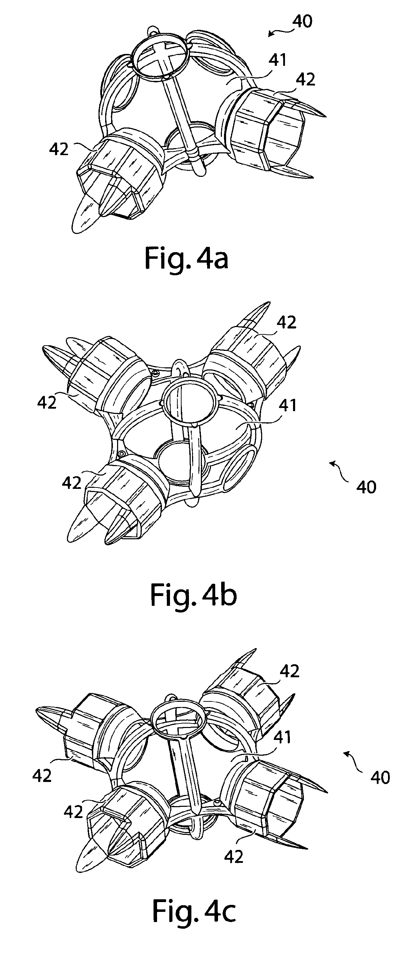

Solution shown in figure 4 is a development of the solution of figure 3, providing an element 40 having a seat 41 for the spherical element and a plurality of seats 42 supporting the bars. Particularly, two seats 42 are provided in figure 4a, three seats 42 are provided in figure 4b, and four seats 42 are provided in figure 4c. obviously, the number of seats 42 can also be higher.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Support and positioning structure for modular elements of assemblies for realising complex figures, **characterised in that** it comprises an element providing at least a seat supporting a substantially spherical shaped element and at least two seats supporting substantially elongated bars.

2. Support and positioning structure for modular elements of assemblies for realising complex figures according to claim 1, **characterised in that** said element is comprised of plastic material.

3. Support and positioning structure for modular elements of assemblies for realising complex figures according to one of the preceding claims, **characterised in that** said element provides a circular seat housing the substantially spherical shaped element, with at least a lateral opening for introducing the end of a bar.

4. Support and positioning structure for modular elements of assemblies for realising complex figures according to one of the preceding claims 1 or 2, **characterised in that** said element provides a central seat for fixed joint of a substantially spherical shaped element, and at least two lateral fixed joints for the ends of said bars.

5. Support and positioning structure for modular elements of assemblies for realising complex figures according to claim 4, **characterised in that** three lateral fixed joints are provided.

6. Support and positioning structure for modular elements of assemblies for realising complex figures according to claim 4, **characterised in that** four lateral fixed joints are provided.

7. Support and positioning structure for modular elements of assemblies for realising complex figures according to claim 4, **characterised in that** a number of lateral fixed joints higher than four is provided.

8. Support and positioning structure for modular elements of assemblies for realising complex figures according to one of the preceding claims 1 or 2, **characterised in that** said element is comprised of two hemi-parts that can be coupled each other.

9. Support and positioning structure for modular elements of assemblies for realising complex figures according to claim 8,
**characterised in that** said hemi-parts realise the seat for housing the substantially spherical shaped element.

10. Support and positioning structure for modular elements of assemblies for realising complex figures according to claim 8 or 9, **characterised in that** coupling between said hemi parts is obtained by fixed joint.

11. Support and positioning structure for modular elements of assemblies for realising complex figures according to one of the preceding claims, **characterised in that** said element comprising the structure is obtained by moulding.

12. Support and positioning structure for modular elements of assemblies for realising complex figures according to each one of the preceding claims, substantially as illustrated and described.
